# EUROPÄISCHE PATENTSCHRIFT

(11) **EP 2 083 958 B1**
(45) Veröffentlichungstag und Bekanntmachung des Hinweises auf die Patenterteilung: **23.11.2016**
(21) Anmeldenummer: 07846264.5
(22) Anmeldetag: 26.10.2007
(51) Int. Cl.: B22F 3/115, B32B 15/01, C23C 4/12, F16C 33/14

(54) **VERFAHREN ZUR HERSTELLUNG ZWEIER MITEINANDER VERBUNDENER SCHICHTEN UND NACH DEM VERFAHREN HERSTELLBARES FUNKTIONSBAUTEIL**
METHOD FOR PRODUCING TWO BONDED-TOGETHER LAYERS AND FUNCTIONAL COMPONENT THAT CAN BE PRODUCED BY THE METHOD
PROCÉDÉ DE FABRICATION DE DEUX COUCHES MUTUELLEMENT RELIÉES, ET ÉLÉMENT FONCTIONNEL POUVANT ÊTRE FABRIQUÉ SELON LE PROCÉDÉ

(30) Priorität: 01.11.2006 DE 102006051936
(43) Veröffentlichungstag der Anmeldung: 05.08.2009
(73) Patentinhaber: Zollern BHW Gleitlager GmbH & CO. KG, 38124 Braunschweig (DE)
(72) Erfinder: JAHN, Peter, 38124 Braunschweig (DE); KUPETZ, Rainer, 38154 Königslutter (DE); ENGEL, Ulrich, 4810 Gmunden (AT)
(74) Vertreter: Lins, Martina
(86) Internationale Anmeldenummer: PCT/DE2007/001927
(87) Internationale Veröffentlichungsnummer: WO 2008/052516

(56) Entgegenhaltungen:
- EP-A- 0 270 265
- EP-A- 1 422 309
- WO-A-01/79575
- WO-A-95/12473
- GB-A- 1 083 003
- GB-A- 1 531 222

## Beschreibung

Die Erfindung betrifft ein Verfahren zur Herstellung wenigstens zweier miteinander verbundener Schichten, von denen eine Schicht als Substrat aus einem Eisenmetall und wenigstens eine Funktionsschicht aus einem Nichteisenmetall besteht.

Die Erfindung betrifft ferner ein nach dem Verfahren hergestelltes Funktionsbauteil.

Es sind zahlreiche Verfahren bekannt, ein Funktionsbauteil herzustellen, bei dem zwischen einem Substrat und einer Funktionsschicht ein Werkstoffverbund hergestellt wird. Derartige Funktionsbauteile sind beispielsweise Lager-bauteile, die aus einem stabilen Substrat, vorzugsweise aus einem Eisenmetall, insbesondere Stahl, bestehen und deren Funktionsschicht durch ein Nichteisenmetall als Laufschicht gebildet ist.

Es ist durch DE 10 2004 044 519 A1 bekannt, den Gleitkörper aus dem Nichteisenmetall durch Sprühkompaktieren zu bilden. Sprühkompaktieren ist ein Urformverfahren, bei dem der Werkstoff geschmolzen wird und über eine Düsenanordnung mittels eines unter Druck stehenden Gases in feine Tröpfchen aufgeteilt und so zu einem Sprühkegel aus den Tröpfchen geformt wird. Das Aufsprühen erfolgt auf eine Form, wobei sich die Tröpfchen des Sprühkegels durch starke Abkühlung zu einer gleichmäßigen Schicht auf der Oberfläche der Form verteilen und eine feste Schicht ausbilden. Der durch Sprühkompaktieren hergestellte Gleitkörper wird mit einem Substrat des Funktionsbauteils durch Kondensatorentladungsschweißen flächig oder punktuell verbunden. Die Herstellung eines derartigen Funktionsbauteils gestaltet sich aufwändig, insbesondere wenn das Funktionsbauteil hohe Druck- und Lastgradienten aufnehmen muss. In diesem Fall muss die Verbindung zwischen Gleitkörper und Substrat sorgfältig und aufwändig durch Schweißen hergestellt werden.

Durch EP 1 422 309 A1 ist es bekannt, mit einer Sprühkompaktierungsanlage zumindest eine Schicht auf einem Substrat zu erzeugen, die auf dem Substrat haften soll. Die Schicht kann dabei eine Zwischenschicht sein, die mit einer Porosität und/oder mit Hinterschneidungen eingestellt wird, um so eine anschließend aufgebrachte Funktionsschicht zu verankern. Das Substrat ist dabei aus einer nickel- oder kobaltbasierten Superlegierung gebildet, während die Zwischenschicht die Zusammensetzung MCrAlY aufweist, wobei M für ein Element der Gruppe Eisen, Nickel oder Kobalt steht. Die anschließend aufgebrachte Funktionsschicht kann eine Verankerungsschicht oder keramische Wärmedämmschicht sein.

Durch EP 0 270 265 A1 ist ein Metallsprühverfahren bekannt, mit dem zwei metallische Laminatschichten übereinander herstellbar sind. Mit Sprühkegeln, die auf einer Substratfläche nebeneinander nicht überlappend oder einander überlappend positioniert sein können, werden heiße Metallpartikel mit einem relativ kalten Gas auf die Substratoberfläche gesprüht. Wenn die Sprühkegel der beiden metallischen Werkstoffe in Bewegungsrichtung des Substrats hintereinander angeordnet sind, treffen die metallischen heißen Partikel des zweiten Sprühstrahls auf, wenn die Partikel des ersten Sprühstrahls bereits abgekühlt und verfestigt sind. Auf diese Weise entstehen zwei übereinander angeordnete metallische Schichten, die ein Laminat bilden. Wenn die Sprühkegel überlappend positioniert sind, ist es notwendig, die beiden Sprühkegel alternierend zu betreiben, um die gewünschte Laminatstruktur zu erzielen. Ein kontinuierlicher Betrieb ist daher für die nicht überlappend hintereinander angeordneten Sprühkegel vorgesehen.

WO 95/12473 A1 beschreibt ein Plasma-Sprayverfahren, bei dem zwei Materialzusammensetzungen in Form von Flüssigkeitströpfchen, teilweise verfestigten Tröpfchen oder feinen Festteilchen in Sprühkegeln versprüht werden. Die Sprühkegel werden so ausgerichtet, dass sich eine Schicht ausbildet, in der eine Zusammensetzung eher eine untere Grenzschicht bildet, während die andere Zusammensetzung eher die obere Grenzschicht bildet, sodass dazwischen ein Mischübergang zwischen den beiden Zusammensetzungen entsteht. Das eine Material kann ein kohlenstoffarmer Stahl sein und das andere Material ein Wolfram-Karbid. Die Sprühablagerung findet auf einem Substrat statt, das von der aufgebauten Schicht entfernt wird und daher nicht zur Verbindung mit der Lamlnatschicht vorgesehen ist. Das Substrat kann eine Positivform darstellen, das sich in der aufgebauten Schicht als Negativform widerspiegelt.

Ein Sprühverfahren, bei dem sich eine aufgesprühte Schicht mit dem Substrat verbinden soll, ist durch GB 1 083 003 bekannt. Dabei werden heiße Metallpartikel versprüht, die sich beim Aufprallen auf das Substrat sofort verfestigen und so eine eher poröse Schicht ausbilden. Durch das gleichzeitige Aufsprühen mehrerer Materialien kann dabei eine Mischschicht als Gradientenschicht entstehen. Die jeweils hergestellten Schichten werden vorzugsweise durch Walzen o. ä. kompaktiert. Eine Kombination der aufgebrachten Materialien besteht aus Aluminium- und Bleiverbindungen. Das Versprühen der heißen Metallteilchen entspricht nicht einem Sprühkompaktieren.

Der vorliegenden Erfindung liegt die Aufgabe zugrunde, die Herstellung eines Funktionsbauteils der eingangs erwähnten Art zu vereinfachen.

Zur Lösung dieser Aufgabe ist bei einem Verfahren der eingangs erwähnten Art erfindungsgemäß vorgesehen, dass der Werkstoff einer der Schichten geschmolzen und anschließend durch Sprühkompaktieren mit einem mit einem Sprühgas ausgebildeten Sprühkegel auf die relativ zu dem Sprühkegel bewegte andere, in fester Form vorliegende Schicht unter Einstellung der Verfahrensparameter Temperatur der Schmelze, Temperatur und Druck des Sprühgases, Umgebungstemperatur sowie Temperatur der anderen Schicht so aufgebracht wird, dass dabei der feste Werkstoffverbund zwischen den Schichten hergestellt wird und dass die Funktionsschicht aus zwei als Schmelzen bereitgestellten Werkstoffen, die in der Schmelze nicht miteinander mischbar sind, durch Sprühkompaktieren gebildet wird, indem die Werkstoffe in feinen Sprühtröpfchen miteinander vermischt die Funktionsschicht mit einer Legierung aus den Werkstoffen bilden.

Zur Lösung dieser Aufgabe ist bei einem Herstellungsverfahren für ein derartiges Funktionsbauteil erfindungsgemäß vorgesehen, dass der Werkstoff wenigstens einer der Schichten geschmolzen und anschließend durch Sprühkompaktieren mit einem Sprühkegel auf die relativ zu dem Sprühkegel bewegte andere Schicht so aufgebracht wird, dass dabei der Werkstoffverbund hergestellt wird.

Erfindungsgemäß lassen sich somit zwei metallische Schichten flächig und in einem Werkstoffverbund fest miteinander dadurch verbinden, dass die eine Schicht durch Sprühkompaktieren auf die andere Schicht aufgebracht wird. Dabei kann allerdings auch die andere Schicht selbst durch Sprühkompaktieren gebildet werden. Sie muss dabei ggf. noch nicht einmal ausgehärtet sein.

Die vorliegende Erfindung bezieht sich auf ein Funktionsbauteil, das aus einem metallischen Substrat aus einem Eisenmetall, vorzugsweise Stahl und aus einer mit dem Substrat verbundenen metallischen Funktionsschicht aus einem Nichteisenmetall besteht. Die Begriffe "Eisenmetall"' und "Nichteisenmetall" sowie "metallischer Werkstoff" schließen immer auch Legierungen ein.

Der Erfindung liegt die Erkenntnis zugrunde, dass bei der Herstellung der Schicht durch Sprühkompaktieren durch eine geeignete Wahl der für das Sprühkompaktieren wesentlichen Verfahrensparameter eine Werkstoffverbindung zwischen der gesprühten Schicht und der anderen Schicht erzielbar ist, auch wenn beispielsweise die andere Schicht aus einem Eisenmetall und die aufgesprühte Schicht aus einem Nichteisenmetall besteht. Die für die Herstellung eines Werkstoffverbundes zwischen den Schichten relevanten Verfahrensparameter sind insbesondere die Temperatur der zu einem Sprühkegel geformten Schmelze, die den Temperaturabfall der Sprühtröpfchen bis zum Auftreffen auf der anderen Schicht verursachenden Temperaturen des unter Druck stehenden Gases und der Umgebung, der Druck des Sprühgases und die Temperatur des Substrats. Erfindungsgemäß ist es möglich, diese Parameter so zu wählen, dass ein fester Werkstoffverbund zwischen den Schichten entsteht. Demzufolge wird erfindungsgemäß das Spruhkompaktieren nicht als Urformverfahren, sondern als Beschichtungsverfahren genutzt.

Obwohl die geeignete Wahl der Verfahrensparameter einen wirksamen Werkstoffverbund zwischen den Schichten regelmäßig ermöglicht, kann es zweckmäßig sein, vor dem Sprühkompaktieren eine Zwischenschicht aufzubringen, die beim Auftreffen der Sprühtropfen des Sprühkegels eine Verbindung zum Substrat einerseits und zum Material der Funktionsschicht andererseits herstellt. Die Verbindung wird durch die beim Auftreffen der Sprühtropfen des Sprühkegels auf die Zwischenschicht übertragene Temperaturerhöhung ermöglicht. Wie für das Urformen mit dem Sprühkompaktieren bereits an sich bekannt ist, können der Schmelze nichtmetallische Feststoffpartikel beigemischt werden, um die Gebrauchseigenschaften der aufgesprühten Funktionsschicht durch die regelmäßig gleichmäßige Verteilung der Feststoffpartikel in der Funktionsschicht zu steuern.

Erfindungsgemäß wird die Funktionsschicht in einem Durchgang aus wenigstens zwei Werkstoffen hergestellt, die als Schmelzen bereitgestellt und auf das Substrat aufgesprüht werden. Die Schmelzen können dabei in Bewegungsrichtung eines Trägers, der das Substrat sein kann, aufgesprüht werden. Die Schmelzen können dabei in Bewegungsrichtung des Trägers nacheinander auf den Träger aufgesprüht werden.

Dabei ist es möglich, die Temperaturen des Substrats und/oder der Schmelzen so einzustellen, dass die Werkstoffe in feinen Sprühtröpfchen miteinander vermischt eine Funktionsschicht bilden. Dadurch ist es möglich, eine Funktionsschicht mit einer Legierung aus Werkstoffen herzustellen, die in herkömmlichen Verfahren nicht miteinander legierbar sind.

In einer modifizierten Ausführungsform des erfindungsgemäßen Verfahrens können die Temperaturen des Substrats bzw. Trägers und/oder der Schmelzen so eingestellt werden, dass die Schichten aus den verschiedenen Werkstoffen vor der Erstarrung nur teilweise vermischen und so eine Gradienten-Funktionsschicht bilden. Wenn die beiden Werkstoffe in Bewegungsrichtung nacheinander aufgesprüht werden, entsteht eine derartige teilweise Vermischung über die Dicke der Funktionsschicht, wodurch ein allmählicher Übergang von dem überwiegenden ersten Werkstoff auf den überwiegenden zweiten Werkstoff erreicht wird, die Schichten also ineinander übergehen.

Die Erfindung lässt sich insbesondere für Gleitlagerschichten mit Vorteil einsetzen. An Gleitlagerschichten werden an sich widerstreitenden Anforderungen gestellt. Zum einen sollen derartige Schichten eine gute Einbettfähigkeit für Fremdpartikel haben, die beispielsweise im Schmierstoff in das Lager transportiert werden, damit das Lager durch die Fremdpartikel nicht beschädigt wird, zum anderen soll das Gleitlager eine möglichst lange Standzeit haben und insbesondere gute Notlaufeigenschaften für den Fall aufweisen, dass die die hohe Einbettfähigkeit aufweisende Gleitlagerschicht abgenutzt ist.
Durch die Ausbildung einer Gleitlagerschicht mit zwei oder mehr unterschiedlichen Schichten kann den unterschiedlichen Anforderungen, insbesondere der hohen Einbettfähigkeit einer Schicht und einer guten Notlaufeigenschaft durch eine darunter liegende Schicht Rechnung getragen werden. Die Gleitlagerschichten sind dabei Schichten aus Nichteisenmetallen.

Die übereinander angeordneten erfindungsgemäßen gebildeten Schichten können eine gleiche Matrixstruktur bei unterschiedlichen Zusammensetzungen aufweisen oder aus unterschiedlichen Matrixstrukturen - und damit unterschiedlichen Zusammensetzungen - gebildet sein.

Beispiele für derartige Schichtkombinationen mit gleicher Matrix sind CuSn6/CuSn15. Eine derartige Schichtkombination kann erfindungsgemäß auf ein Eisensubstrat aufgebracht werden.

Schichtkombinationen aus Legierungen mit unterschiedlicher Matrix sind beispielsweise CuSn/SnSbCu, AlSn/SnSbCu.

Die in die Schicht beim Sprühkompaktieren eingebrachten Feststoffpartikel können beispielsweise Hartteilchen aus Diamant, Karbiden, Silikaten und keramikartige Teilchen sein, während als Weichpartikel Teilchen mit Schmiereigenschaften, wie MoS₂, PTFE, Silikone, Bariumsulfat usw. sein können. Die Verhinderung des Schmelzens der Feststoffpartikel in der Schmelze erfolgt üblicherweise dadurch, dass die Feststoffteilchen über das Sprühgas mit der Schmelze vermischt werden, also üblicherweise nicht der Schmelze zugegeben werden. Dadurch gibt es nur eine kurze Kontaktzeit zwischen Sprühtropfen und Feststoffpartikeln, in der die übertragene Wärme nicht ausreicht, die Feststoffpartikel zum Schmelzen zu bringen. Alternativ können Feststoffpartikel verwendet werden, deren Schmelztemperatur höher als die Temperatur der Schmelze des Werkstoffes für die Funktionsschicht ist.

Das erfindungsgemäße Verfahren schließt im Übrigen nicht aus, dass auch das Substrat in einem an sich bekannten Urformvorgang durch Sprühkompaktieren hergestellt wird.

Das erfindungsgemäße Verfahren eignet sich zur Herstellung von Werkstoffverbunden bei ebenen Substraten ebenso wie bei dreidimensionalen Substraten, wie beispielsweise Rohren, Kugeln usw. Die relative Bewegung zwischen Substrat und Sprühkegel kann linear, vorzugsweise jedoch in Form eines Scanvorgangs mit einem vorzugsweise sinusförmigen Bewegungsablauf, erfolgen.

Die Erfindung soll im Folgenden anhand von in der Zeichnung dargestellten Ausführungsbeispielen näher erläutert werden. Es zeigen:
- Figur 1: eine schematische Schnittdarstellung einer für die Durchführung des erfindungsgemäßen Verfahrens geeigneten Vorrichtung zur Herstellung eines Werkstoffverbundes durch Sprühkompaktieren;
- Figur 2: eine schematische Darstellung der Aufbringung einer Funktionsschicht in einem Werkstoffverbund mit einem Substrat;
- Figur 3: eine schematische Darstellung der Aufbringung einer aus zwei Teilschichten bestehenden Funktionsschicht mittels zweier Sprühkegel.

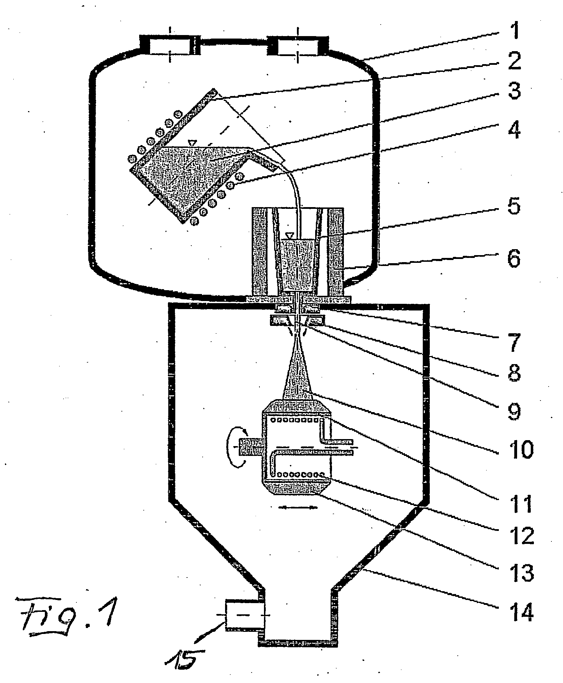

Figur 1 zeigt einen Kessel 1, in dem sich ein Tiegel 2 befindet, der mit einer Schmelze eines Werkstoffs 3 gefüllt ist. Der Werkstoff wird aufgeschmolzen und mittels einer Heizspule 4 auf einer gewünschten Schmelzetemperatur von beispielsweise 1150°C gehalten, wenn der Werkstoff eine CuSn6 Legierung ist. Der so vorbereitete, geschmolzene Werkstoff gelangt in ein Verteilergefäß 5, das innerhalb eines Verteilerofens 6 auf der gewünschten Schmelzetemperatur gehalten wird. Durch eine Öffnung im Boden des Verteilergefäßes 5 tritt ein Schmelzestrahl aus und tritt durch eine Primärgasdüse 7 sowie eine Zerstäubergasdüse 8 in Form eines Schmelzestrahls 9 hindurch. In der Zerstäubergasdüse 8 wird Zerstäubergas mit einem Überdruck von beispielsweise 3,5 bar zu einem Sprühkegel 10 umgeformt. Die in dem Sprühkegel 10 enthaltenen Tropfen des Werkstoffes 3 gelangen auf ein Substrat 11, das in Figur 1 in Form eines Rohres ausgebildet ist. Das Substrat 11 ist mittels einer Substratheizung 12 in Form einer stromführenden Spule vorgeheizt bis eine Temperatur von ca. 1000°C (für ein Stahlsubstrat aus St-37) erreicht ist. Das Substrat 11 wird in dem in

Figur 1 dargestellten Ausführungsbeispiel um eine in der Rohrachse des Substrats 11 liegende Achse gedreht, sodass sich auf dem Substrat 11 eine Funktionsschicht 13 aufbaut.

Die gesamte Sprühanordnung befindet sich in einer Kammer 14, die einen Auslass 15 zum Austritt des Zerstäubergases aufweist.

Als Zerstäubergas eignet sich vorzugsweise ein inertes Gas, wie insbesondere Stickstoff. Eine entsprechende inerte Atmosphäre ist auch innerhalb des Kessels 1 zweckmäßig bzw. für viele Werkstoffe notwendig.

In einem Ausführungsbeispiel beträgt die Rotationsfrequenz für die Rotation des rohrförmigen Substrats 11 1,2 Hz, der Abstand Z zwischen Zerstäubergasdüse 8 und Substrat 11 330 mm und die Beschichtungsdauer ca. 130 s. In dieser Zeit ist auf das Substrat 11 eine Masse von ca. 32 Kg als Funktionsschicht 13 aufgebracht worden. Bei einem Durchmesser des Substrats von 380 mm und einer Länge von 140 mm.

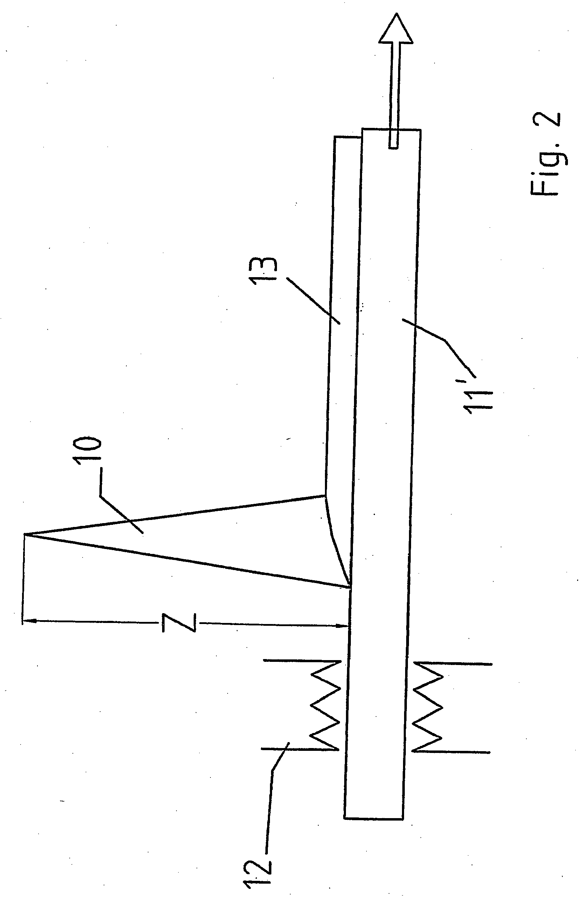

Der Zerstäubergasdruck hat zwischen 2,5 und 3,5 bar gelegen, wobei es sich gezeigt hat, dass ein erhöhter Zerstäubergasdruck von 3,5 bar während des Sprühvorganges auf einen Druck von unter 3 bar reduziert werden kann. Nach der Beschichtung kann das Substrat 11 mit der Funktionsschicht 13 zweckmäßigerweise an Luft abkühlen. Falls im Einzelfall erforderlich, kann eine mechanische Nachverdichtung vorgenommen werden. Figur 2 verdeutlicht schematisch ein ebenes Substrat 11' auf das mittels des Sprühkegels 10 die Funktionsschicht 13 aufgebracht wird. Auch hier ist eine Substratheizung 12 vorgesehen, um optimale Bedingungen für die Herstellung des Werkstoffverbundes einzustellen.

Es sei jedoch darauf hingewiesen, dass die Heizung des Substrats zur Herstellung eines Werkstoffverbundes nicht in jedem Fall erforderlich ist. Die etwaige Heizung ist abhängig von dem für das Substrat 11, 11' verwendeten Werkstoff.

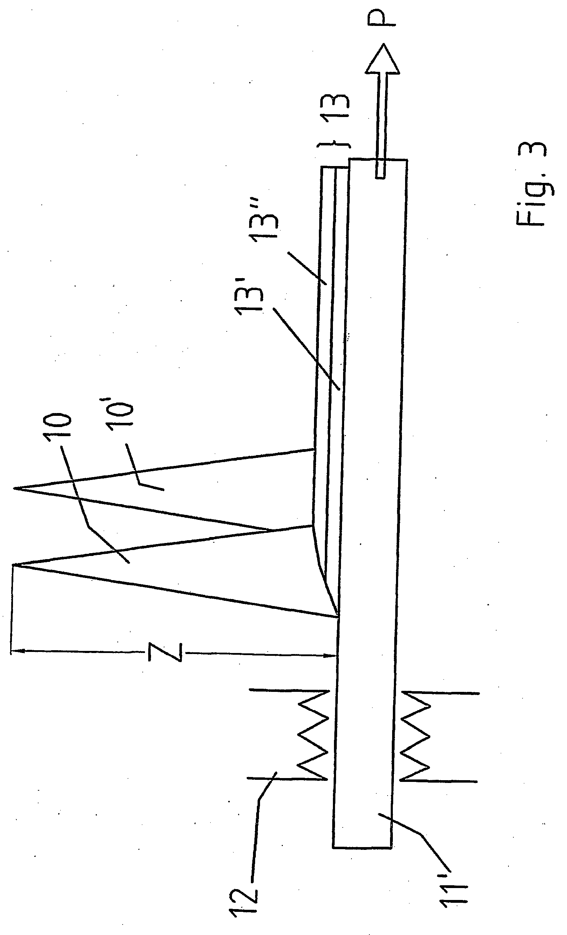

Bei der in Figur 3 dargestellten Variante besteht die Funktionsschicht 13 aus zwei Teilschichten 13', 13", die mit zwei in Bewegungsrichtung P des Substrats hintereinander angeordneten Sprühkegels 10, 10' aufgebracht werden. Dabei überlappen sich die Sprühkegel 10, 10' in Höhe des Substrats 11' etwas, sodass zwischen den beiden Teilschichten 13' und 13" eine (nicht dargestellte) Übergangszone entsteht, die für die Verbindung der beiden Teilschichten 13', 13" untereinander förderlich ist.

Der erfindungsgemäße erzielte Werkstoffverbund zwischen dem Substrat 11, 11' und der Funktionsschicht 13 lässt sich für die verschiedensten Werkstoffpaarungen durch die Wahl der geeigneten Verfahrensparameter erzielen, wie dies an dem oben dargestellten Ausführungsbeispiel erläutert worden ist.

Als Verfahrensparameter kommen dabei insbesondere die Temperatur der Schmelze 3 bzw. des Schmelzestrahls 9, der Druck des Zerstäubergases für die Herstellung des Sprühkegels 10, die Temperatur des Substrats 11, 11' sowie die Geschwindigkeit der relativen Bewegung des Substrats 11, 11' zum Sprühkegel 10, 10' in Frage, wobei die relative Bewegung durch eine zusammengesetzte Bewegung mit einer Komponente in Förderrichtung P und einer Komponente senkrecht dazu (beispielsweise Rotationsbewegung beim rohrförmigen Substrat 11 gemäß Figur 1) gebildet sein kann.

Für einige Anwendungsfälle kann es zweckmäßig sein, das Substrat 11, 11' durch Aufbringung einer dünnen Zwischenschicht vorzubehandeln, wobei die Zwischenschicht als bindungsvermittelnde Zwischenschicht fungieren kann. Eine derartige Zwischenschicht kann den Werkstoffverbund zwischen problematischen Werkstoffpaarungen aus Substrat 11, 11' und Funktionsschicht 13 verbessern, indem beispielsweise eine intermetallische Verbindung zwischen Substrat 11, 11' und Zwischenschicht einerseits und Zwischenschicht und Funktionsschicht 13 andererseits hergestellt wird, während eine unmittelbare Verbindung zwischen Substrat 11, 11' und Funktionsschicht 13 problematisch wäre.

Eine Zwischenschicht kann auch zweckmäßig sein, wenn der Werkstoffverbund zwischen Funktionsschicht 13 und Substrat 11, 11' beispielsweise aufgrund stark. unterschiedlicher Wärmeausdehnungskoeffizienten unter bestimmten Bedingungen gefährdet ist. Eine Zwischensicht mit einem zwischen den Wärmeausdehnungskoeffizienten von Substrat 11, 11' einerseits und Funktionsschicht 13 andererseits kann den hergestellten Werkstoffverbund für höhere Temperaturschwankungen belastbar machen.

In ähnlicher Weise kann die Zwischenschicht auch für die verbesserte Aufnahme von Sperrschiebekräften, beispielsweise bei einer erforderlichen Nachverdichtung der Sprühschicht, vorteilhaft sein, wenn das Material der Zwischenschicht derartige Sperrschiebekräfte aufnehmen kann und daher für eine nur abgeschwächte Übertragung dieser Kräfte auf das Substrat 11, 11' sorgt. Diese Funktion der Zwischenschicht kann auch für anschließende Prozessschritte wie Pressen, Walzen oder Schmieden mit Vorteil ausgenutzt werden.

Als bindungsvermittelnde Zwischenschichten kommen herkömmliche Schweiß-, Lot- und Diffusionsschichten in Frage. Ferner können An- oder Aufschmelzungen verwendet werden, die zu intermediären Verbindungen und/oder Mischkristallbildungen führen.

Die Zwischenschichten können in herkömmlicher Weise auf Eisen- oder Nichteisensubstrate aufgebracht werden, wie beispielsweise durch Galvanisieren, Tauchen, Aufwalzen, Reibschweißen und Sputtern.

Geeignete Zwischenschichten bestehen beispielsweise nur oder überwiegend aus Kupfer, Zinn, Zink, Nickel, Wismut, Silber, Nickel-Zinn, Chrom, Aluminium, Aluminium-Zinn, Aluminium-Zink, Nickel-Chrom usw. Bindungsvermittelnd sind beispielsweise Zink- oder Zinn-Zwischenschichten für Eisen-, Kupfer- oder Eisen-Aluminium-Werkstoffverbunde.

In der Zeichnung ist dargestellt, dass die beiden Sprühkegel 10, 10' eine gleiche Höhe Z über der Oberfläche des Substrats 11' aufweisen, die durch die Anordnung der jeweiligen- (nicht dargestellten) Sprühdüsen- definiert ist. Selbstverständlich ist es möglich, die Ausbildung der Schichten 13, 13' dadurch zu variieren, dass für einen der Sprühkegel eine andere Höhe Z gewählt wird als für den anderen Sprühkegel. Entsprechend ist es auch möglich, die Dicke der aufgebrachten Schichten 13, 13' zu variieren, in dem der Materialdurchsatz durch die Düsen der Sprühkege 10, 10' unterschiedlich gestaltet wird, ggf. in Verbindung mit unterschiedlichen Höhen Z der Sprühkegel 10, 10'. Die Ausbildung der Funktionsschichten 13 bzw. der Teilschichten 13', 13" kann ferner durch eine Variation des Drucks des Sprühgases beeinflusst werden.

Das erfindungsgemäße Verfahren ermöglicht die Herstellung von Funktionsbauteilen in einer einfachen Weise dadurch, dass beim Aufbringen der Funktionsschicht 13 der Werkstoffverbund durch das Sprühkompaktieren unmittelbar hergestellt wird. Alle bisher für die Verbindung von Substrat 11, 11' und Funktionsschicht 13 erforderlichen Verfahrensschritte können daher entfallen.

Eine bevorzugte Anwendung für die Erfindung ist die Herstellung von Gleit- oder Wälzlagerbauelementen mit den beschriebenen Schichtaufbauten.

### Beispiele

1. Auf ein Stahl-Substrat 11, 11' wird eine Sprühschicht aus Bronze (CuSn,
   CuMeX) so aufgesprüht, dass ein Werkstoffverbund entsteht. Die Sprühschicht bildet dann eine Funktionsschicht 13.
2. Auf ein Stahl-Substrat 11, 11' wird als Funktionsschicht 13 eine Sprühschicht aus SnAl30 als Funktionsschicht 13 aufgesprüht. Vorher ist das Substrat 11, 11' jedoch mit einer Zwischenschicht mit einer Stärke von weniger als 10 µm versehen worden, die eine bindungsvermittelnde oder diffusionsverhindernde Schicht ist. Als Zwischenschichtwerkstoff kommen beispielsweise in Frage Cu, Sn/Zn, Sn usw..
3. Auf ein Stahl-Substrat 11, 11' werden zwei Schichten 13', 13" aufgesprüht, die aus unterschiedlichen Legierungen bestehen. Dabei wird eine direkte Bindung zum Stahl-Substrat hergestellt. Die beiden Schichten (13, 13") können so aufgebracht werden, dass sich keine wesentlichen Mischungsbereiche ausbilden. Es liegt dann ein Schichtwerkstoff vor.
   Die beiden Schichten 13', 13" können auch mit einer wesentlichen Durchmischungszone abgeschieden werden, um einen Gradientenwerkstoff zu bilden. Die realisierten Schichtdicken der Schichten 13', 13" sind frei wählbar.
4. Auf ein Stahl-Substrat 11, 11' wird eine erste Funktionsschicht 13' (beispielsweise CuSnₓ) unter Herstellung eines Werkstoffverbunds aufgesprüht. Auf die erste Schicht 13' wird dann eine Zwischenschicht mit einer Schichtdicke < 10 µm aufgebracht. Zwischenschichtwerkstoffe können beispielsweise sein Ag, Sn, Ni usw.. Danach wird eine zweite Schicht 13" als Sprühschicht aufgebracht, z.B. aus AlSn.
   Die Werkstoffe der beiden Schichten 13', 13" würden ohne die Zwischenschicht intermetallische Verbindungen mit unerwünschten Eigenschaften, insbesondere einer hohen Spröde, bilden. Die Zwischenschicht verhindert somit eine Diffusion zwischen den Schichten 13', 13" und die Ausbildung der unerwünschten intermetallischen Phase zwischen den Schichten 13', 13". Die Zwischenschicht kann ebenfalls aufgesprüht werden, bevorzugt ist jedoch ein konventioneller Auftrag.
5. Auf einen Träger wird eine erste Sprühschicht 13 als Funktionsschicht aufgebracht, ohne dass ein Werkstoffverbund mit dem Trägerhergestellt wird. Die Sprühschicht kann dabei beispielsweise in Form eines Halbzylinders ausgebildet sein. Wenn die Funktionsschicht 13 hergestellt ist, kann nunmehr das Substrat 11, 11' aus Stahl ebenfalls durch Sprühen hergestellt werden und auf der Mantelinnenseite der zylindrischen Funktionsschicht 13 aufgebracht werden. Gegebenenfalls kann auch hierbei eine Zwischenschicht vorgesehen werden, die dann vor dem Aufsprühen des Substrats 11, 11' auf die Mantelinnenseite der Funktionsschicht 13 aufgebracht wird.

## Patentansprüche

1. Verfahren zur Herstellung wenigstens zweier miteinander verbundener Schichten (11, 13; 11', 13'), von denen eine Schicht (11, 11') als Substrat aus einem Eisenmetall und wenigstens eine Funktionsschicht (13) aus einem Nichteisenmetall besteht, **dadurch gekennzeichnet, dass** der Werkstoff einer der Schichten (11, 13; 11', 13') geschmolzen und anschließend durch Sprühkompaktieren mit einem mit einem Sprühgas ausgebildeten Sprühkegel (10, 10') auf die relativ zu dem Sprühkegel (10, 10') bewegte andere, in fester Form vorliegende Schicht unter Einstellung der Verfahrensparameter Temperatur der Schmelze, Temperatur und Druck des Sprühgases, Umgebungstemperatur sowie Temperatur der anderen Schicht so aufgebracht wird, dass dabei ein fester Werkstoffverbund zwischen den Schichten hergestellt wird und dass die Funktionsschicht (13) aus zwei als Schmelzen bereitgestellten Werkstoffen, die in der Schmelze nicht miteinander mischbar sind, durch Sprühkompaktieren gebildet wird, indem die Werkstoffe in feinen Sprühtröpfchen miteinander vermischt die Funktionsschicht (13) mit einer Legierung aus den Werkstoffen bilden.

2. Verfahren nach Anspruch 1, **dadurch gekennzeichnet, dass** auf das Substrat (11, 11') die Funktionsschicht (13) durch Sprühkompaktieren aufgebracht wird.

3. Verfahren nach Anspruch 1, **dadurch gekennzeichnet, dass** auf die Funktionsschicht (13) das Substrat (11, 11') durch Sprühkompaktieren aufgebracht wird.

4. Verfahren nach einem der Ansprüche 1 bis 3, **dadurch gekennzeichnet, dass** die Temperaturen der Schmelzen und die Bewegung des Trägers so eingestellt werden, dass sich die Schichten (13', 13") aus den verschiedenen Werkstoffen teilweise vermischen und so eine Gradientenschicht bilden.

5. Verfahren nach einem der Ansprüche 1 bis 4, **dadurch gekennzeichnet, dass** sich die Sprühkegel (10, 10') für zwei Werkstoffe im Bereich der sich bildenden Schichten (13', 13") überlappen.

6. Verfahren nach einem der Ansprüche 1 bis 5, **dadurch gekennzeichnet, dass** der versprühten Schmelze des Werkstoffs nicht schmelzende Feststoffparfikel beigemischt werden.

7. Funktionsbauteil hergestellt durch das Verfahren nach einem der Ansprüche 1 bis 6.

## Claims

1. A method for producing at least two layers (11, 13; 11', 13') that are bonded to each other, wherein one layer (11, 11') acting as a substrate material consists of a ferrous metal and at least one functional layer (13) consists of a non-ferrous metal, **characterized in that** the material of one of the layers (11, 13; 11', 13') is melted and, using a spray cone (10, 10') that is made up using a spray gas, is subsequently applied to the other layer by spray compacting, said other layer being a solid layer that is moved relative to the spray cone (10, 10'), while the following processing parameters are being set: temperature of the melt, temperature and pressure of the spray gas, ambient temperature, and temperature of the other layer, and that, thereby, the material composite is produced between the layers and that the functional layer (13) is made by spray compacting of two materials that are provided as melts and cannot be mixed with each other in the melt, this being achieved by the materials that are mixed with each other in fine spray droplets forming the functional layer (13) with an alloy consisting of the materials.

2. A method as set forth in claim 1, **characterized in that** the functional layer (13) is applied onto the substrate (11, 11') by spray compacting.

3. A method as set forth in claim 1, **characterized in that** the substrate (11, 11') is applied onto the functional layer (13) by spray compacting.

4. A method as set forth in claim 1 or 3, **characterized in that** the temperatures of the melts and the movement of the carrier are set such that the layers (13, 13') of the different materials blend partially and in this manner form a gradient layer.

5. A method as set forth in one of the claims 1 to 4, **characterized in that** the spray cones (10, 10') for the two materials overlap in the area of the forming layers (13', 13").

6. A method as set forth in one of the claims 1 to 5, **characterized in that** non-melting solid particles are added to the sprayed melt of the material.

7. A functional component, produced by means of the method according to any one of claims 1 to 6.

## Revendications

1. Procédé pour fabriquer au moins deux couches (11, 13 ; 11', 13') reliées l'une à l'autre, dont une couche (11, 11') formant substrat est constituée en un métal ferreux et au moins une couche fonctionnelle (13) est constituée en un métal non-ferreux, **caractérisé en ce que** l'on fait fondre le matériau de l'une des couches (11, 13 ; 11', 13') et ensuite on applique ce matériau par compactage par pulvérisation avec un cône de pulvérisation (10, 10') réalisé par un gaz de pulvérisation sur l'autre couche se présentant sous forme solide et déplacée par rapport au cône de pulvérisation (10, 10'), en ajustant les paramètres de procédé que sont la température de la matière en fusion, la température et la pression du gaz de pulvérisation, la température ambiante ainsi que la température de l'autre couche, de telle sorte que l'on réalise ainsi un matériau composite solide entre les couches et que l'on réalise par compactage par pulvérisation la couche fonctionnelle (13) à partir de deux matériaux mis en fusion, qui ne sont pas miscibles en fusion, du fait que les matériaux mélangés l'un avec l'autre en fines gouttelettes de pulvérisation constituent la couche fonctionnelle (13) avec un alliage de ces matériaux.

2. Procédé selon la revendication 1, **caractérisé en ce que** l'on applique la couche fonctionnelle (13) par compactage par pulvérisation sur le substrat (11, 11').

3. Procédé selon la revendication 1, **caractérisé en ce que** l'on applique le substrat (11, 11') par compactage par pulvérisation sur la couche fonctionnelle (13).

4. Procédé selon l'une des revendications 1 à 3, **caractérisé en ce que** l'on ajuste les températures des matériaux en fusion et le mouvement du support de telle sorte que les couches (13', 13") des différents matériaux se mélangent partiellement et forment ainsi une couche à gradient.

5. Procédé selon l'une des revendications 1 à 4, **caractérisé en ce que** les cônes de pulvérisation (10, 10') pour deux matériaux se chevauchent dans la zone des couches (13', 13") en train de se former.

6. Procédé selon l'une des revendications 1 à 5, **caractérisé en ce que** l'on mélange des particules solides qui ne se fondent pas dans le matériau en fusion pulvérisé.

7. Composant fonctionnel, réalisé par le procédé selon l'une des revendications 1 à 6.
